## Europäisches Patentamt
## European Patent Office
## Office européen des brevets

(19)

(11) Numéro de publication: **0 168 292**
**B1**

(12)

# FASCICULE DE BREVET EUROPÉEN

(45) Date de publication du fascicule du brevet:
**12.10.88**

(51) Int. Cl.⁴: **G 01 C 19/64**

(21) Numéro de dépôt: **85401126.9**

(22) Date de dépôt: **07.06.85**

(54) **Dispositif de mesure d'un déphasage non réciproque engendré dans un interferomètre en anneau.**

(30) Priorité: **14.06.84 FR 8409311**

(43) Date de publication de la demande:
**15.01.86 Bulletin 86/3**

(45) Mention de la délivrance du brevet:
**12.10.88 Bulletin 88/41**

(84) Etats contractants désignés:
**DE GB NL**

(56) Documents cité:
**EP-A-0 030 891**
**FR-A-2 443 668**

(73) Titulaire: **THOMSON- CSF, 173, Boulevard Haussmann, F-75379 Paris Cédex 08 (FR)**

(72) Inventeur: **Graindorge, Philippe, THOMSON- CSF SCPI 173, bld Haussmann, F-75379 Paris Cedex 08 (FR)**
Inventeur: **Arditty, Hervé, THOMSON- CSF SCPI 173, bld Haussmann, F-75379 Paris Cedex 08 (FR)**
Inventeur: **Lefevre, Hervé, THOMSON- CSF SCPI 173, bld Haussmann, F-75379 Paris Cedex 08 (FR)**

(74) Mandataire: **Lepercque, Jean, THOMSON- CSF SCPI 19, avenue de Messine, F-75008 Paris (FR)**

## Description

La présente invention se rapporte à un dispositif de mesure d'un déphasage non réciproque engendré dans un interféromètre optique en anneau, encore appelé interféromètre de SAGNAC.

Un tel interféromètre comporte principalement une source d'énergie lumineuse généralement constituée par un laser; un dispositif optique constitué soit d'un certain nombre de miroirs, soit d'une fibre optique enroulée sur elle-même, ce dispositif formant guide d'onde; un dispositif de séparation et de mélange de la lumière et un dispositif de détection et de traitement du signal détecté.

Il est connu que dans ces interféromètres, il existe deux ondes issues du dispositif séparateur et parcourant en sens opposés un même trajet optique.

Une propriété fondamentale des interféromètres en anneau est la réciprocité qui peut s'exprimer comme suit: toute perturbation du trajet optique affecte semblablement les deux ondes malgré que ces deux ondes ne la subissent ni exactement au même instant, ni dans le même sens.

Il existe cependent deux types de perturbations qui affectent réciprocité.

Il s'agit, d'une part, des perturbations qui varient dans le temps, ce dans un laps de temps comparable au temps que mettent les ondes à se propager le long du chemin optique de l'interféromètre; et, d'autre part, les perturbations dites "non réciproques", c'est-à-dire les perturbations n'ayant pas le même effet sur les ondes selon qu'elles se propagent dans un sens ou dans un autre le long du chemin optique. Il s'agit d'effets physiques qui détruisent la symétrie du milieu dans lequel se propagent les ondes.

Deux effets connus présentent ce dernier type de perturbations:

- l'effet Faraday, ou effet magnéto-optique colinéaire, par lequel un champ magnétique crée une orientation préférentielle du spin des électrons d'un matériau optique;

- et l'effet SAGNAC, ou effet inertiel relativiste, dans lequel la rotation de l'interféromètre par rapport à un repère Galliléen détruit la symétrie du temps de propagation. Cet effet est mis à profit pour réaliser des gyromètres notamment.

En l'absence de manifestation de perturbations "non réciproques", la différence de phase (que l'on appellera dans ce qui suit $\Delta\Phi$) entre les deux ondes qui se recombinent dans le dispositif de séparation et de mélange après avoir parcouru le chemin optique est nulle. Le dispositif de détection et de traitement détecte des signaux représentant la puissance optique de l'onde composite obtenue après récombinaison. Cette puissance peut se décomposer dans les interféromètres de l'art connu en deux composantes: une composante constante et une composante proportionnelle à Cos ( $\Delta\Phi$), cette composante n'existant qu'à l'apparition de perturbations "non réciproques".

Si on désire mesurer des perturbations de faible amplitude, par exemple dans le cas de gyromètres, des faibles vitesse de rotation, la composante contenant le terme en Cos ($\Delta\Phi$) varie peu, puisque le déphasage $\Delta\Phi$ est proche de zéro.

Il est alors nécessaire d'introduire artificiellement un déphasage supplémentaire fixe ou "biais non réciproque" pour augmenter la sensibilité de la mesure. Un cas particulièrement intéressant est celui où le nouveau déphasage mesuré $\Delta\Phi'$ est tel que $\Delta\Phi' = \Delta\Phi + \frac{\pi}{2}$.

Dans ce cas, la sensibilité est maximale puisque le terme à mesurer est proportionnel à Cos ($\Delta\Phi + \frac{\pi}{2}$, c'est-à-dire à sin ($\Delta\Phi$).

Bien que séduisant, ce procédé s'est heurté à des difficultés de réalisation et notamment à la possibilité de réaliser un dispositif introduisant un "biais non réciproque" suffisamment stable pour être utilisable. L'instabilité de ces dispositifs est en général du même ordre de grandeur que les variations de la grandeur à mesurer.

Aussi pour pallier ces inconvénients, il a été proposé dans le brevet FR-B-2 471 583, une modulation de phase des ondes qui se propagent dans l'anneau, alternativement de $+ \pi/2$ et $- \pi/2$ radians.

Cette methode est basée sur la propriété qu'a l'interféromètre de SAGNAC de réaliser l'équivalent d'une dérivation temporelle discrète.

En effet, une modulation de phase étant produite à une extrémité de la boucle de fibre, l'une des ondes subit la modulation au moment où celle-ci est produite, alors que l'autre onde la subit avec un retard égal au temps de propagation dans la fibre. Ce temps de propagation satisfait la relation: $t_0 = \frac{nl}{c}$, dans laquelle n est l'indice de réfraction de la silice, 1 la longueur de la fibre et c la vitesse de la lumière dans le vide. La "fréquence propre" de l'interféromètre est ($1/2 t_0$), et représente la fréquence de modulation à laquelle les deux ondes subissent deux déphasages en opposition de phase. Le déphasage entre les deux ondes optiques est donc égal à la différence S(t) - S(t - $t_0$), où S(t) est le signal appliqué au modulateur de phase. On voit donc que, si la demi-période du signal de modulation est $t_0$, le déphasage en sortie de l'interféromètre est égal au double du déphasage appliqué. C'est cette méthode qui est utilisée pour créer le biais donnant le point de fonctionnement de l'interféromètre.

A ce déphasage s'ajoute un déphasage $\Delta\Phi_0$ dû à l'effet non réciproque, en l'occurrence dû à la rotation si elle n'est pas nulle.

Il est possible d'exploiter les signaux directement et de mesurer la composante en Cos ($\Delta\Phi + \pi/2$).

Une méthode plus précise, évitant les erreurs dues aux dérives éventuelles des différents éléments utilisés par exemple les éléments optoélectroniques, consiste en une méthode indirecte ou "méthode de zéro". Selon cette méthode, on compare cet écart du déphasage par rapport à $\pm \pi/2$ radians en générant un déphasage supplémentaire, égal en valeur absolue à l'amplitude du déphasage dû à l'effet non réciproque et de signe contraire, de manière à l'annuler.

Pour ce faire, on ne peut, de façon pratique, utiliser le même phénomène physique qui produit l'effet non réciproque, en l'occurrence jouer sur la rotation.

On fait appel à des moyens électriques pour générer un signal de contre-réaction. Il est supposé que l'on peut obtenir une plus grande maîtrise de ces moyens électriques que des autres éléments de l'interféromètre, ce que l'expérience a montré.

L'objet de cette contre-réaction est de créer entre les deux ondes un déphasage constamment égal et de signe opposé à celui induit par la vitesse de rotation. Si la vitesse est constante, et crée un déphasage $\Delta\Phi$, il faut donc qu'entre deux instants séparés de t, la valeur instantanée de la modulation de phase ait varié de $(\Delta\Phi_o + 2\pi n)$ radians, n étant un nombre entier. Ceci est donc l'équivalent d'une intégrale de la vitesse. Une façon de faire est de générer une "rampe" de phase de pente proportionnelle à $(\Delta\Phi_o/t_o)$.

Cependant, cette méthode suppose deux opérations distinctes: la modulation de phase et la génération d'un signal de contre-réaction. En outre, le facteur de proportionnalité ou facteur d'échelle n'est pas lié à celui mis en oeuvre pour la modulation de $\pm (\pi/2)$ radians.

En outre, la "rampe" de phase ne peut être infinie, c'est-à-dire que le signal, qui est constitué dans la pratique par une tension de commande d'un modulateur de phase, ne peut augmenter au-dessus d'un seuil déterminé.

Aussi une méthode utilisable est de générer des signaux de commande de déphasage en dents de scie d'amplitude crête à crête $2\pi$ radians, les fonctions mathématiques mises en cause étant périodiques et de période $2\pi$ radians. Il s'ensuit le problème de déterminer avec précision cette amplitude de déphasage égale à $2\pi$ radians.

L'invention se fixe pour but de pallier les difficultés qui viennent d'être évoquées. Pour ce faire, la "rampe" de phase consiste en un signal numérique. La modulation de phase, également sous forme numérique, et cette "rampe" de phase sont combinées en un signal unique et converties en un signal analogique de commande d'un modulateur de phase disposé dans l'anneau.

Outre la simplification qui en résulte, les problèmes du lien entre les facteurs d'échelles et le problème de la relaxation de $2\pi$ radians se trouvent résolus simplement et simultanément.

L'invention a donc pour objet un dispositif interférométrique optique de mesure d'un déphasage non réciproque subi par deux ondes lumineuses, circulant en sens opposés dans un guide d'onde en anneau, ce dispositif comprenant une source lumineuse monochromatique, des moyens photodétecteurs de l'interférence de ces deux ondes délivrant un signal électrique de sortie représentatif de l'intensité lumineuse de l'interférence détectée et des moyens optiques séparateurs et mélangeurs couplant optiquement les extrémités de ce guide d'onde à la source lumineuse et aux moyens photodétecteurs, des moyens de déphasage optique à commande électrique disposés dans l'anneau agissant sur ces ondes; un oscillateur délivrant des signaux électriques périodiques en créneaux de fréquence $f_o = 1/2t_o$ ; $t_o$ étant le temps mis par chacune des ondes pour parcourir le chemin optique défini par l'anneau; caractérisé en ce qu'il comprend des circuits de détection synchrone recevant le signal de sortie du photodétecteur sur une première entrée et un signal de synchronisation de la détection dérivé desdits signaux électriques de fréquence $f_o$ sur une seconde entrée; un convertisseur analogique-numérique connecté à la sortie des circuits de détection synchrone et convertissant les signaux électriques issus de la détection synchrone en un mot binaire signé de longueur déterminée, des circuits de génération d'un signal de commande numérique composite et un convertisseur numérique-analogique convertissant ce signal de commande numérique composite en un signal de commande analogique transmis à une entrée de commande desdits moyens de déphasages optiques; et des moyens de commande et de synchronisation des circuits de détection synchrone du convertisseur analogique-numérique, des circuits de génération du signal de commande numérique composite et du convertisseur numérique-analogique, et en ce que les circuits de génération dudit signal de commande numérique composite élabore un signal issu de la superposition d'un premier signal périodique en créneaux à ladite fréquence $f_o$ tel que, après conversion numérique-analogique, ce premier signal imprime un déphasage périodique à effet réciproque alternativement de $+ \pi/2$ et $- \pi/2$ radians auxdites deux ondes circulant en sens inverses dans l'anneau, et d'un second signal en marches d'escalier, chaque marche ayant une durée égale audit temps $t_o$ ou à un multiple entier de ce temps et une amplitude telle que, après conversion analogique-numérique, ce second signal imprime des déphasages supplémentaires incrémentaux à effet réciproque d'amplitude proportionnelle à l'amplitude dudit déphasage non réciproque et de signe opposé; le déphasage imprimé par le second signal présentant une relaxation d'amplitude $2\pi$ radians; de manière à ce que ladite superposition des premier et second signaux formant le signal de commande composite imprime aux ondes circulant en sens inverses dans l'anneau des déphasages totaux, entre ces deux ondes variant alternativement entre $-\pi/2$ et $+\pi/2$ radians pendant des premières périodes et $-3\pi/2$ et $+3\pi/2$ radians pendant des secondes periodes; ces premières et secondes périodes se succédant selon une séquence imbriquée.

L'invention sera mieux comprise et d'autres avantages apparaîtront à l'aide de la description qui suit et des figures annexées et parmi lesquelles:

- la figure 1 est un interféromètre en anneau de l'art connu;
- la figure 2 est un diagramme représentant la variation de la puissance optique détectée en fonction de la différence de phase entre les deux ondes circulant dans l'anneau de l'interféromètre;
- les figures 3 à 5 illustrent un procédé de modulation permettant un gain en sensibilité selon l'art connu;
- les figures 6 et 7 sont des diagrammes illustrant des aspects particuliers du procédé selon l'invention;
- la figure 8 illustre schématiquement un dispositif selon l'invention;
- les figures 9 à 13 illustrent des aspects supplémentaires du fonctionnement du dispositif selon l'invention;
- la figure 14 est un exemple détaillé de réalisation concrète d'un dispositif selon l'invention.

Il est tout d'abord utile de rappeler les principaux phénomènes mis en jeu dans un interféromètre en anneau de type SAGNAC ainsi que la méthode de modulation enseignée par le brevet FR-A-2 471 583 précité.

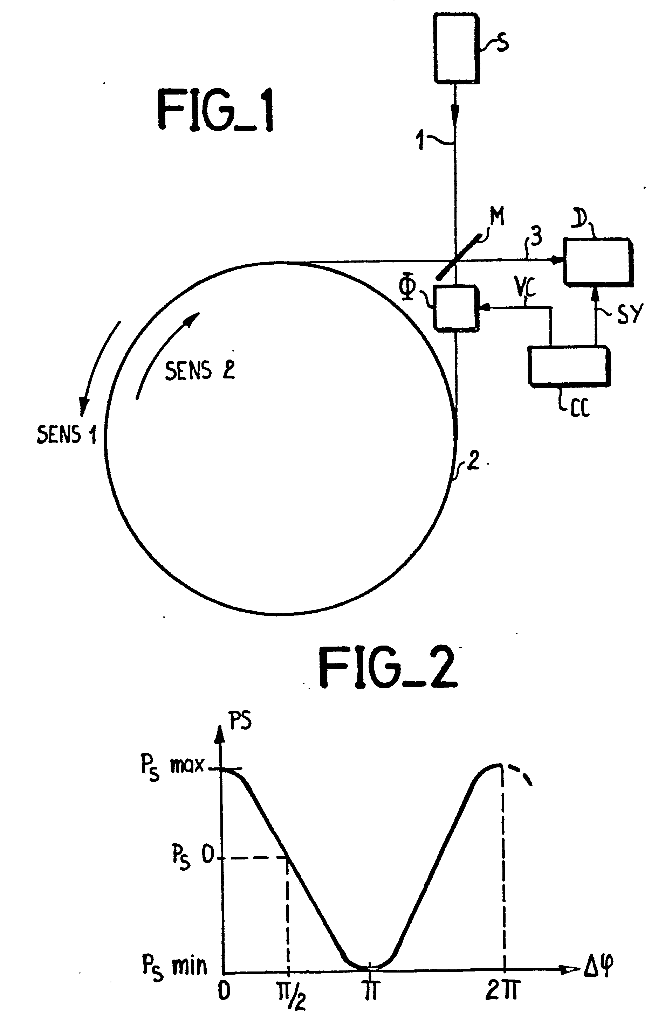

La figure 1 illustre schématiquement l'architecture d'un interféromètre en anneau tel que décrit dans ce brevet.

Une source laser S produit un faisceau de rayons parallèles 1, vers un dispositif séparateur constitué, par exemple, par une lame ou un miroir semi-transparent M couplé optiquement à l'anneau 2 de l'interféromètre. Cet anneau 2 peut être réalisé par exemple à l'aide d'une fibre optique monomode enroulée sur elle-même. En effet, la sensibilité de la mesure est accrue grâce à l'utilisation d'un parcours optique long proportionnel au nombre de tours. Cet anneau 2 est rebouclé sur le dispositif séparateur M qui joue également le rôle d'un dispositif mélangeur et définit ainsi une branche de sortie 3. L'anneau est donc parcouru par deux ondes se propageant en sens inverses: l'une dans le sens horaire ("sens 2"), l'autre dans le sens anti-horaire ("sens 1"). Ces deux ondes se recombinent sur la lame séparatrice M. Le résultat de cette recombinaison peut être observé dans la branche de sortie 3 à l'aide du détecteur D.

Soit $\Delta \Phi_o$ est la différence de phase entre les deux ondes qui se propagent en sens inverse dans l'anneau et $P_S$ la puissance optique due sortie que l'on peut mesurer dans la branche de sortie 3. En l'absence de perturbation "non réciproque" $\Delta \Phi_o$ est nul.

Si, à titre d'exemple non limitatif, on considère un gyromètre mettant en oeuvre un interféromètre en anneau, une perturbation "non réciproque" va être créée par la mise en rotation du gyromètre. La différence de phase n'est plus nulle et l'on a $\Delta \Phi_o = \alpha \Omega$ où $\Omega$ est la vitesse de rotation et $\alpha = k \frac{L}{\lambda C}$ où k est une constante dépendant de la géométrie du gyromètre, L la longueur du parcours optique, $\lambda$ la longueur d'onde de la lumière émise par la source laser S, et C la vitesse de la lumière dans l'anneau 2. Lorsque la vitesse de rotation $\Omega$ augmente, la différence de phase $\Delta \Phi_o$ augmente dans les mêmes proportions car le coefficient $\alpha$ reste constant. La puissance optique $P_S$ évolue selon une loi cosinusoïdale. En effet:

$P_S = P_{1S} + P_{2S} + 2 \sqrt{P_{1S} P_{2S}} \cos \Delta \Phi_o$;

relation dans laquelle la composante $P_{1S}$ correspond au "sens 1" et la composante $P_{2S}$ au "sens 2". La sensibilité de la mesure pour une valeur $\Delta \Phi$ donnée est exprimée par la dérivée de $P_S$:

$$\frac{DP_S}{d(\Delta \Phi)} = -2 \sqrt{P_{1S} P_{S2}} \sin (\Delta \Phi_o).$$

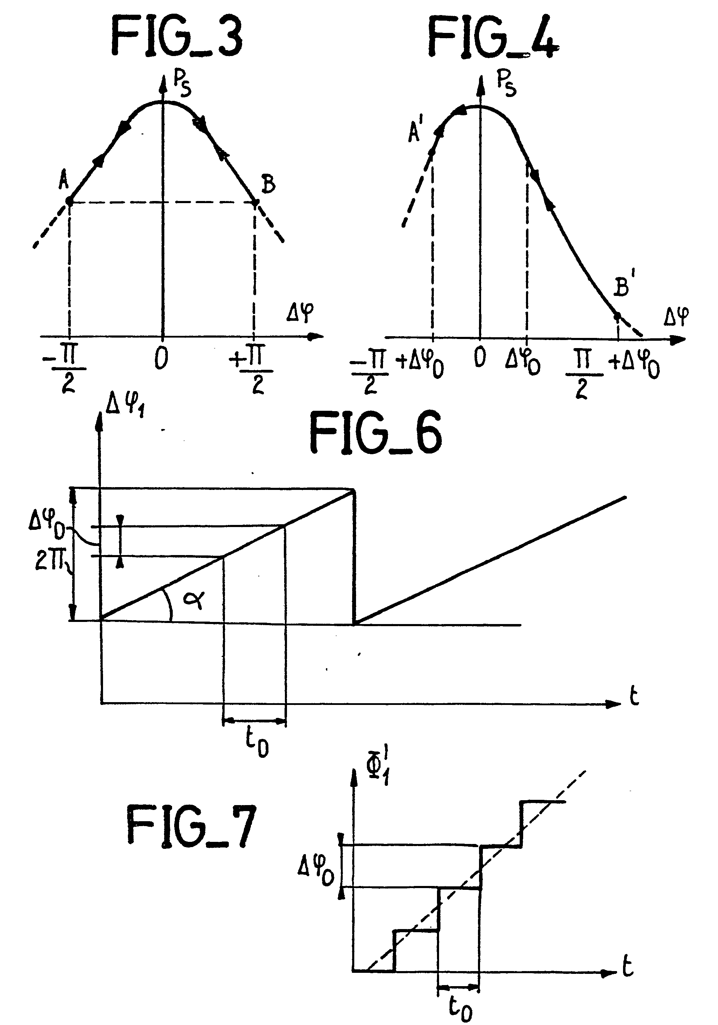

La sensibilité de l'interféromètre est très faible si la différence de phase $\Delta\Phi$ est peu différente de zéro. C'est le cas dans un gyromètre si on désire mesurer de faibles vitesses de rotation $\Omega$. La variation de la puissance optique dans la branche de sortie en fonction de la différence de phase $\Delta\Phi$ est illustrée par le diagramme de la figure 2.

On peut considérer les termes $P_{1S}$ et $P_{2S}$ égaux. Il s'en suit que pour une différence de phase $\Delta\Phi = \pi$ radians, la puissance détectée est minimum. Elle passe par un maximum $P_{Smax}$ pour $\Delta \Phi = o$ et pour $2 \pi$ radians et ainsi de suite.

Pour augmenter la sensibilité de l'interféromètre, on peut introduire un biais "non réciproque" constant dans la phase des deux ondes circulant en sens inverses de façon à déplacer le point de fonctionnement de l'interféromètre.

Dans le cas d'une fonction variant selon une loi cosinusoïdale, le point de plus haute sensibilité est obtenu par les angles de $(2n + 1) \pi/2$ radians, avec n nombre entier. On peut donc choisir un biais introduisant une variation de phase sur chaque onde en valeur absolue de $\pi/4$ radians mais de signes contraires. En l'absence de perturbation "non réciproque" la différence de phase devient alors $\Delta \Phi' = \Delta \Phi_1 + \Delta \Phi_o$ avec $\Delta \Phi_1 = \pm \pi/2$ radians, on se place alors au point $P_{So}$ de la figure 2.

Selon l'enseignement du brevet français précité, on introduit sur le parcours des ondes dans l'anneau 2, un modulateur de phase mettant en jeu un effet réciproque. Ce modulateur $\Phi$ (figure 1) est excité de façon à créer une variation de phase $\Phi(t)$ de l'onde qui le traverse. Cette variation est périodique, sa période étant égale à $2 t_o$, $t_o$ étant le temps de parcours d'une onde dans l'anneau.

La différence de phase devient alors
$\Delta \Phi' = \Delta \Phi_o + \Phi(t) - \Phi(t - t_o)$
où chacune des ondes circulant en sens inverse subit ce déphasage lorsqu'elle traverse le modulateur avec
$\Phi(t) = \Phi(t + 2 t_o)$
Les figures 3 et 4 représentent l'effet d'une modulation de phase par une fonction symétrique $\Phi$ (t). Le point de fonctionnement décrit la courbe $P_s = f(\Delta \Phi)$ de la figure 2 de façon symétrique entre un couple de points extrêmes.

Le premier couple A et B, sur la figure 3 représente le cas où la rotation est nulle, il se réduit aux deux valeurs - $\pi/2$ et $\pi/2$ radians; le second couple, A' et B', sur la figure 4 représente le cas où la vitesse à mesurer n'est plus nulle et il se traduit par une valeur $\Delta \Phi_0$ de la différence de phase; il est représenté par les valeurs:

$(-\pi/2 + \Delta \Phi_0)$ et $(+\pi/2 + \Delta \Phi_0)$ radians.

Pour ce faire, on peut appliquer un déphasage réciproque $\Phi$ (t) de forme rectangulaire à une extrémité du trajet optique et d'amplitude ($\pi/4$) radians.

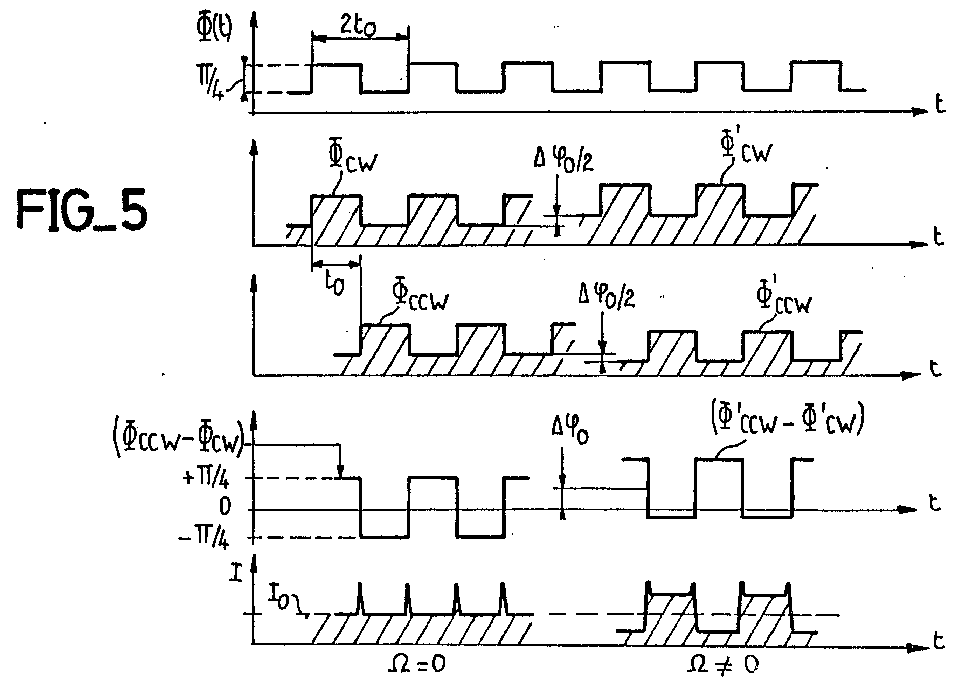

Si on se place dans le cas de la figure 3, c'est-à-dire avec $\Omega = o$ et $\Delta \Phi_0 = o$, au signal détecté précédemment, du fait de l'introduction de $\Phi$ (t), une composante $\Phi$ (t) - $\Phi$ (t - $t_0$). Si $\Phi_{cw}$ et $\Phi_{ccw}$ sont les déphasages résultant des deux ondes qui vont interférer, comme illustré à la figure 5 (partie de gauche). Le déphasage entre $\Phi_{cw}$ et $\Phi_{ccw}$ est alors un déphasage purement réciproque ($\Phi_{ccw}$ - $\Phi_{cw}$) est un signal rectangulaire variant entre + $\pi/4$ et - $\pi/4$ radians.

Par contre, si on se place dans le cas de la figure 4, c'est-à-dire avec $\Omega$ - $\epsilon$, au signal détecté précédemment, on va ajouter du fait de l'introduction de $\Phi$ (t) une composante ($\Phi'_{ccw}$ - $\Phi'_{cw}$) qui n'est plus centrée par rapport à zéro. En effet, au déphasage réciproque précédent s'ajoute un déphasage non réciproque $\Delta \Phi_0$. Par rapport au cas précédent, où $\Omega = o$, on a

$$\Phi'(t) = \Phi (t) + \Delta \Phi_o/2 \text{ et } \Phi'(t -t_o) = \Phi(t-t_o) - \Delta \Phi_o/2$$

ainsi

$$\Phi'(t) - \Phi'(t - t_o) = \Phi(t) - \Phi (t - t_o) + \Delta \Phi_o$$

$\Phi_{cw}$ et $\Phi_{ccw}$ sont les déphasages résultants de chacune des deux ondes qui parcourent la boucle en sens inverses. $\Phi_{ccw}$ - $\Phi_{cw}$ est donc un signal rectangulaire dont la valeur moyenne est décalée de $\Delta \Phi_o$ par rapport à l'axe des temps.

Le modulateur dont quelques exemples de réalisation parmi d'autres possibles ont été décrits dans le brevet français précité, est commandé en tension par un signal $V_c$ généré par un circuit de commande CC (figure 1) à la fréquence (1/2 $t_0$). Le détecteur D est du type synchrone et reçoit un signal de synchronisation SY de même fréquence.

Lorsque la vitesse de rotation est nulle ( $\Omega$ = o), l'intensité optique I détectée est constante et égale à une valeur de repos $I_o$ (figure 5) à l'exception d'impulsions brèves correspondant aux transitions de signaux ($\Phi_{ccw}$ - $\Phi_{cw}$), les temps de montée et descente étant finis. Lorsque la vitesse n'est plus nulle, l'intensité optique I est décrite par des signaux rectangulaires de valeur moyenne égale à la valeur de repos $I_o$, variant au rythme des signaux ($\Phi'_{ccw}$ - $\Phi'_{cw}$).

Comme il a été indiqué précédemment, au lieu d'exploiter les signaux directement, on peut faire appel à une "méthode de zéro".

Pour ce faire, on peut créer un déphasage supplémentaire venant en contre-réaction avec le déphasage $\Delta \Phi_o$ dû à l'effet non réciproque.

Une méthode utilisable est de générer une "rampe" de phase dont la pente est proportionnelle à ($\Delta \Phi_o/t_o$).

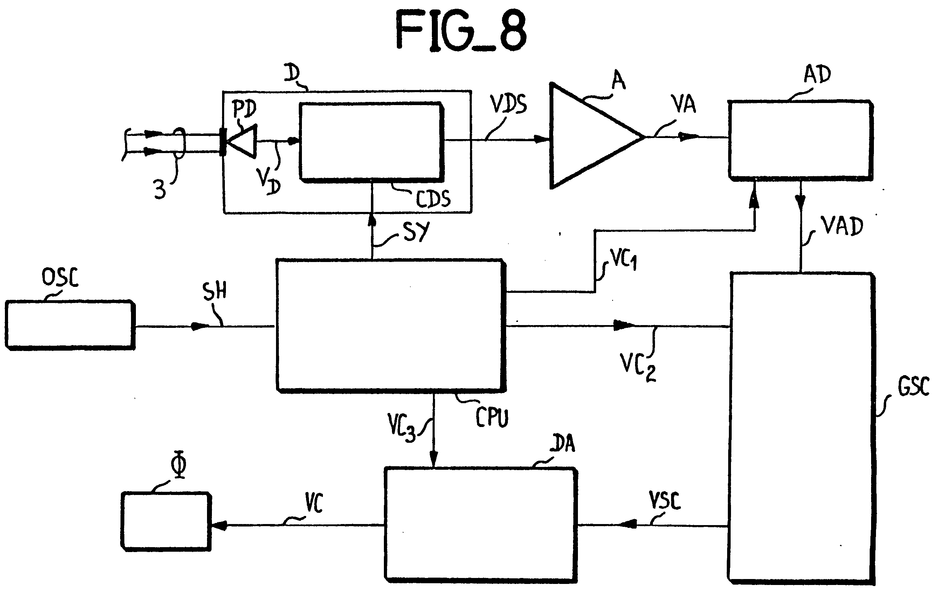

Dans la réalité, il suffit de créer un déphasage modulo 2 $\pi$ radians car on ne peut augmenter indéfiniment le signal de déphasage supplémentaire. Pour ce faire, on génère, comme illustré par la figure 6, des signaux de phase $\Phi_1$ en dents de scie, de pente $\alpha$ proportionnelle à ($\Delta \Phi_o/t_o$) et d'amplitude crête-crête égale à 2 $\pi$ radians.

On combine le signal de modulation de phase avec ces signaux en dents de scie.

Cependant, cette méthode analogique a l'inconvénient de ne pas corréler les facteurs d'échelles des signaux de commande de modulation de phase et des signaux de contre-réaction. En outre, la détection de l'amplitude crête-crête de 2 $\pi$ radians doit être réalisée avec précision.

La présente invention permet d'obvier à ces inconvénients et d'assurer une détection automatique de l'amplitude crête-crête de 2 $\pi$ radians.

Selon une première caractéristique, fondamentale, le signal de déphasage de contre-réaction en dents de scie est remplacé par un signal en marches d'escalier. La hauteur de chaque "marche" est égale à $\Delta \Phi_o$ et la durée égale à $t_o$. La figure 7 illustre un tel signal. Il s'en suit qu'en moyenne, la pente équivalente de la "rampe" en marches d'escalier est égale à ($\Delta \Phi_o/t_o$).

Ainsi deux ondes décalées dans le temps de $t_o$ sont toujours sur deux "marches" successives et donc subissent deux déphasages différents de $\Delta \Phi_o$. Cette technique présente l'avantage d'être parfaitement compatible avec un système de traitement numérique.

D'autre part, la sommation de la modulation en signal à la fréquence (1/2 $t_o$) et de la rampe numérique peut être effectuée directement par un processeur de traitement numérique du signal, ce qui présente de nombreux avantages.

L'architecture générale d'un dispositif d'exploitation du signal issu de la détection d'un effet non réciproque conforme à l'invention va maintenant être décrite en relation avec la figure 8.

Le détecteur synchrone D de la figure 1, couplé optiquement à la voie de sortie 3, comprend essentiellement une photodiode PD convertissant l'intensité optique détectée en signaux électriques de sortie VD. Ces signaux sont transmis à des circuits de détection synchrone CDS recevant sur une entrée de synchronisation des signaux SY à la fréquence 1/2 $t_o$.

Un processeur central CPU gère l'ensemble du dispositif. Il s'agit, dans une variante préférée, d'un système réalisé en logique cablée. Il peut également s'agir d'un microprocesseur associé à des organes d'interfaces d'entrée-sortie pour la commande de périphériques divers.

Ce processeur CPU fournit les signaux SY qui peuvent être la recopie logique de signaux impulsionnels d'horloge SH générés par un oscillateur OSC, par exemple un oscillateur piloté par un quartz thermostaté de fréquence $(1/2\ t_o)$.

Lorsque le gyromètre est en rotation, l'ensemble de la courbe de réponse de l'interféromètre, en fonction du déphasage appliqué par le modulateur, est décalé. Ceci donne lieu à une modulation d'intensité à la fréquence $f_o = (1/2\ t_o)$ dont l'amplitude est proportionnelle à la vitesse si celle-ci est assez faible pour que le déphasage reste dans la zone linéaire de la courbe de réponse.

L'amplitude de cette modulation est extraite par les circuits de détection synchrones CDS qui produisent des signaux de sortie VDS transmis à un élément d'interface A, par exemple un amplificateur associé à un filtre électrique habituellement de type P.I.D.

Le signal de sortie VA de cet élément d'interface A est ensuite numérisé par un convertisseur analogique-numérique AD. Le signal de sortie VAD de ce convertisseur est transmis à un circuit GSC, générateur de signal de commande composite VSC. Ce circuit a pour but d'élaborer la "rampe" numérique en marche d'escalier et de la combiner avec les signaux numériques de modulation de phase selon l'aspect principal de l'invention. Ces circuits comprennent un intégrateur numérique.

Ce signal numérique composite VSC est ensuite converti de nouveau en une tension analogique de commande VC par un convertisseur numérique-analogique DA.

C'est cette dernière tension qui est transmise à l'entrée de commande du modulateur de phase $\Phi$.

Le processeur central CPU outre les signaux de synchronisation SY du détecteur synchrone D, génère différents autres signaux de commande et de synchronisation référencés $VC_1$ à $VC_3$ transmis aux éléments du dispositif de l'invention et qui seront détaillés ultérieurement.

En utilisant un intégrateur numérique dans les circuits GSC suivi du convertisseur numérique-analogique DA, on résoud très simplement le problème de la relaxation périodique de $2\ \pi$ radians. En effet, l'intégrateur numérique est limité en dynamique par le nombre N de bits utilisés, ce qui fait que les calculs ne produisent que les N bits de poids faible du résultat. Si par ailleurs, le convertisseur DA est calibré de façon à ce que la tension de pleine échelle (correspondant à une entrée numérique de $2^N - 1$) produise un déphasage de $2\ \pi$ radians, on réalise un système qui produit automatiquement des déphasages "modulo $2\ \pi$".

La relaxation de $2\ \pi$ radians se trouve donc réalisée de façon très simple et automatiquement calibrée par le facteur d'échelle du convertisseur DA. Il faut noter que, selon un aspect avantageux, la rampe de phase elle-même, la modulation de mise au biais, qui vaut alternativement $-\frac{\pi}{2}$ et $\frac{\pi}{2}$ radians, et la relaxation de $2\ \pi$ radians sont toutes trois générées de façon numérique, puis converties en tension analogique par un seul convertisseur. Les facteurs d'échelles sont donc intrinsèquement identiques, ce qui réduit beaucoup les possibilités d'erreur.

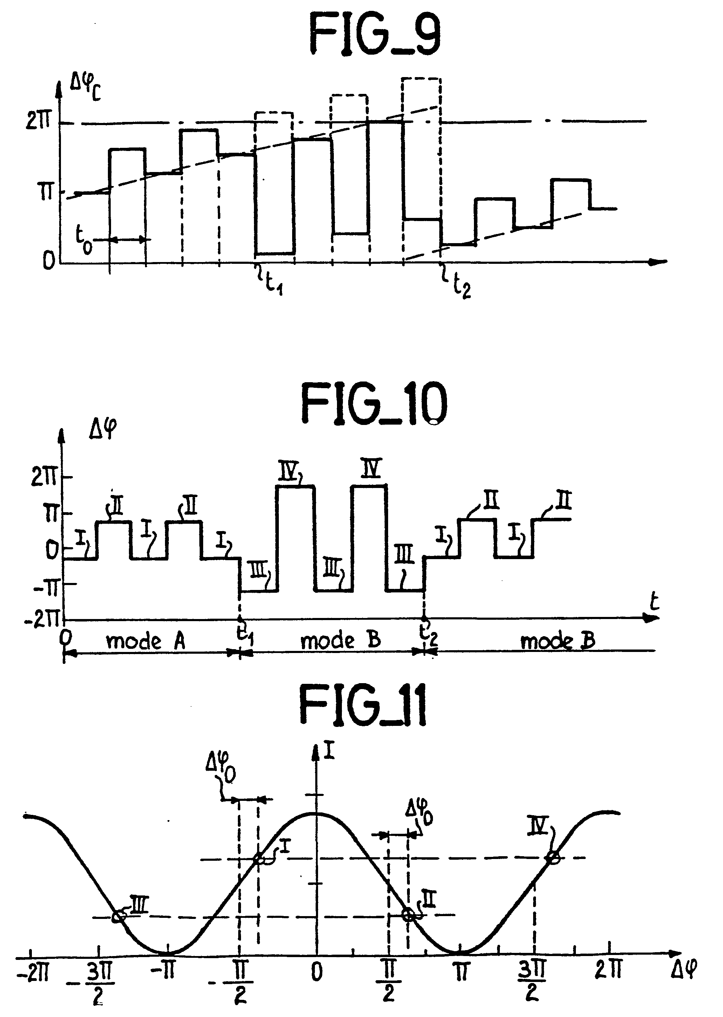

Les variations de phases correspondant au signal VSC sont représentées sur le diagramme de la figure 9 en fonction du temps. L'origine des temps est arbitraire.

Le déphasage composite $\Delta \Phi_c$ augmente avec la rampe numérique de phase $\Phi'_1$ (figure 7) à laquelle est superposée, d'une période à l'autre (intervalle de temps $t_o$), alternativement des incréments positifs ($+\ \pi/4$ radians) et négatifs $(-\pi/4$ radians), ce jusqu'à ce que le seuil de $2\ \pi$ radians soit atteint, c'est-a-dire au temps $t_1$ sur le diagramme. Il est alors soustrait une valeur représentant $2\ \pi$ radians. A la période suivante, $t_1 + t_o$, sur la figure 9, du fait qu'un incrément égal à $-(\pi/4)$ radians est ajouté algébriquement, le signal composite est en-dessous du seuil $2\ \pi$ radians. Ensuite, au temps $t_1 + 2\ t_o$, le processus recommence. Le seuil $2\ \pi$ radians est à nouveau dépassé. On soustrait encore une fois une valeur égale à $2\ \pi$ radians. Le processus se reproduit jusqu'au temps $t_2$ pour lequel l'amplitude de la rampe numérique de phase a dépassé $2\ \pi$ radians. Celle-ci repart de zéro et le cycle recommence de manière semblable à ce qui se passe avant l'instant $t_1$.

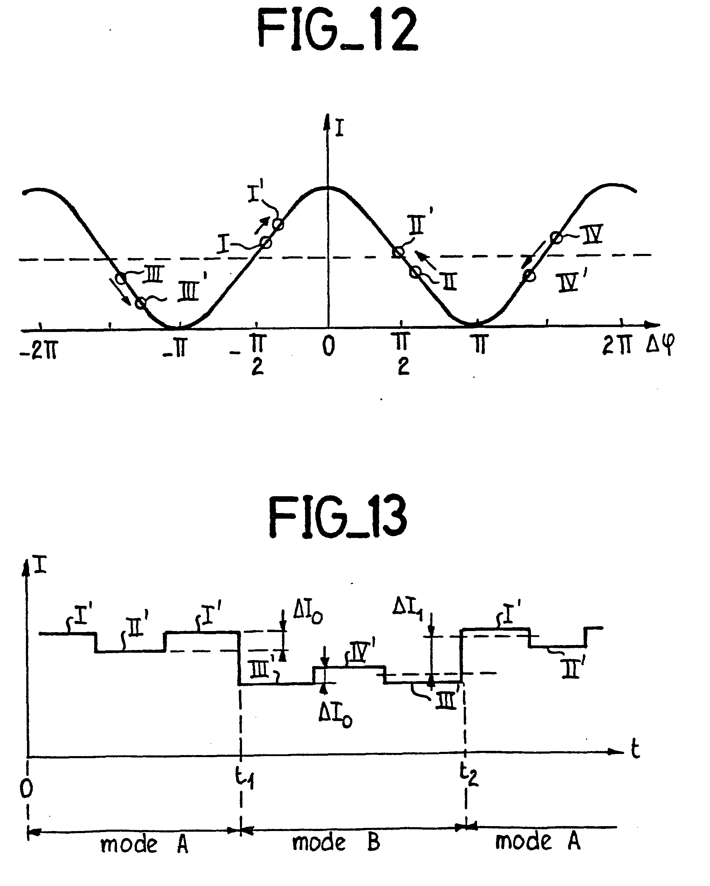

L'évolution des déphasages mesurés en sortie de l'interféromètre est illustrée par le diagramme de la figure 10.

En résumé, tant qu'il n'y a pas débordement de l'intégrateur numérique, la différence de phase entre deux temps d'horloge est $\pm\ \frac{\pi}{2} + \Delta \Phi_o$ ($\Delta \Phi_o$ est la hauteur d'une "marche" de la rampe numérique: figure 7). Les points correspondants, I et II, sur la courbe de réponse de l'interféromètre sont représentés à la figure 11. Cette figure représente l'intensité optique I détectée en fonction du temps t.

Par contre, lorsqu'il y a débordement, la différence de phase entre deux temps d'horloge est $\pm\ \frac{3\pi}{2} + \Delta \Phi_o$, ce qui correspond aux points III et IV sur la figure 11.

Dans les deux cas, on obtient la même réponse en intensité, ce qui montre que cette méthode de relaxation de $2\ \pi$ radians n'apporte pas de modification au signal détecté.

Il y a donc deux modes de fonctionnement dans un cycle complet: le premier référencé "mode A" entre les temps 0 et $t_1$ sur les diagrammes des figures 9 et 10 et le second "mode B" entre les temps $t_1$ et $t_2$, selon qu'il y a ou non débordement de l'intégrateur numérique.

Cependant, selon un aspect avantageux supplémentaire de l'invention, les dispositions retenues dans le cadre de l'invention autorisent les corrections en temps réel du facteur d'échelle du modulateur. En effet, si pour une raison quelconque celui-ci vient à se modifier, il est possible de détecter cette modification.

On va supposer, pour illustrer cette possibilité, que le facteur d'échelle diminue, entraînant corrélativement une modulation de phase d'amplitude trop faible. Cette situation est illustrée par la figure 12.

Les points I à IV deviennent l'a IV'. On constate dans ce cas une contraction générale de la dynamique de la modulation de phase.

Le diagramme de la figure 13 illustre les variations d'intensité optique détectées.

Si l'on reste dans une zone linéaire, les différences d'intensité $\Delta I_0$ entre les points I' et IV' d'une part et entre les points I et IV d'autre part sont inchangées. Par contre, l'intensité moyenne aux points III et IV est inférieure à celle aux points I et II (figure 11).

Le saut d'intensité $\Delta I_1$ observé lors du passage des points de fonctionnement I' et II' ("mode A") aux points de fonctionnement III' et IV' ("mode B") est donc une mesure de l'erreur du facteur d'échelle, et permet ainsi de corriger celui-ci.

Or, cette mesure est faite à chaque relaxation de $2\pi$ radians, c'est-à-dire d'autant plus souvent que la vitesse de rotation est élevée. Ainsi, la précision relative du facteur d'échelle augmente avec la vitesse de rotation, ce qui tend à uniformiser la précision absolue sur toute la gamme de vitesse.

Enfin, selon un autre avantage de l'invention, la mesure angulaire fournit par l'application du signal de contre-réaction avant tout une mesure de position et non de vitesse. En effet, l'intégration numérique de la vitesse donne une mesure de position. Si l'on génère une impulsion à chaque relaxation de $2\pi$ radians, chacune de ces impulsions indique un incrément angulaire $\alpha$ obéissant à la relation:

$$\alpha = \frac{\lambda n}{2R}$$

dans laquelle n, $\lambda$ et R sont, respectivement, l'indice de réfraction équivalent du mode de la fibre, la longueur d'onde de la lumière utilisée et le rayon moyen de fibre optique formant l'anneau (figures 1 : 2).

Dans un exemple de réalisation pratique, le diamètre de l'anneau était 5 cm ce qui correspondait à un incrément angulaire de 5 secondes d'arc pour la fibre et la source laser utilisées.

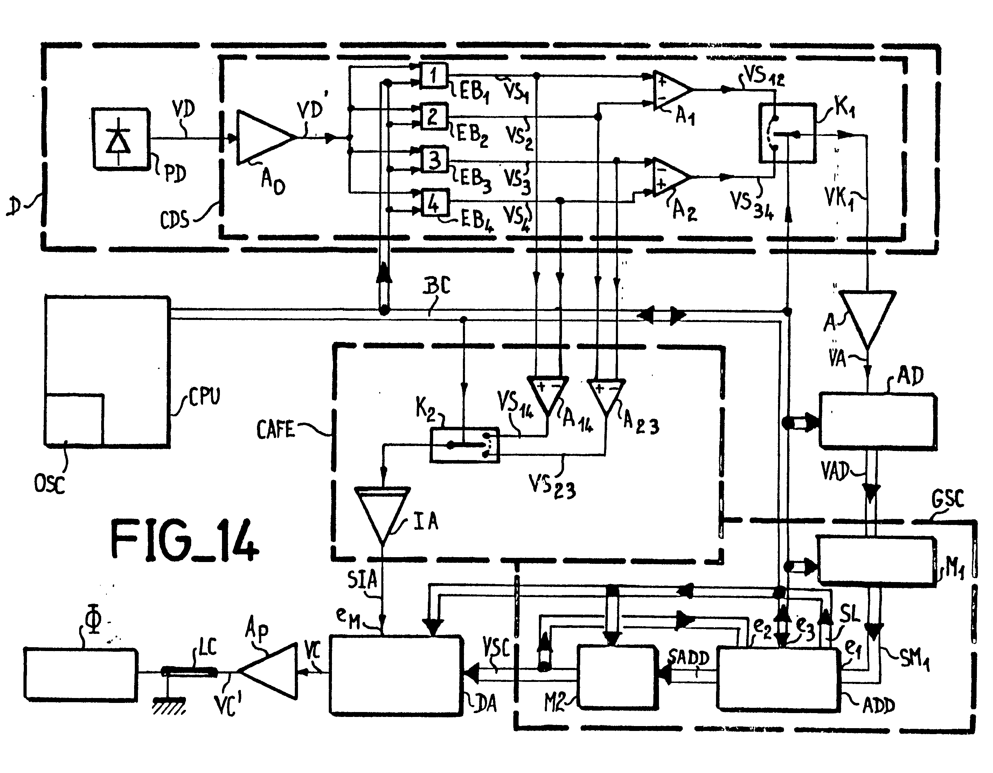

Un exemple détaillé de réalisation des différents blocs synoptiques du dispositif de la figure 8 va maintenant être décrit en relation avec la figure 14. En outre, le dispositif illustré incorpore un circuit d'asservissement du facteur d'échelle selon la caractéristique supplémentaire de l'invention qui vient d'être rappelée.

Les éléments communs à ceux décrits en relation avec la figure 8 portent les mêmes références.

Le processeur central CPU et l'oscillateur OSC générant des signaux à la fréquence $f_0 = (1/2\,t_0)$ ont été représentés en un seul bloc.

Le processeur CPU communique avec les autres blocs par un bus de transmission de données bidirectionnel multiconducteur représenté sous la référence unique BC.

Les signaux véhiculés par ce bus sont des signaux numériques comprenant des signaux de synchronisation, des signaux de commande transmis du processeur CPU aux différents blocs et des signaux d'états, représentant le fonctionnement de certains circuits de ces blocs et transmis au processeur central CPU. Ces signaux seront précisés dans ce qui suit.

Le premier bloc est le bloc de détection D comprenant une photodiode PD délivrant sur sa sortie des signaux carrés VD à la fréquence $f_0$ issus de la conversion de la lumière captée et les circuits de détection synchrone CDS.

Ceux-ci comprennent un amplificateur $A_0$ d'interface et d'adaptation délivrant sur sa sortie des signaux VD', copies logiques des signaux VD.

Ces signaux sont transmis à une entrée de signal de quatre échantillonneurs-bloqueurs $EB_1$ à $EB_4$.

Ceux-ci comportent une entrée d'autorisation recevant des signaux d'autorisation, via le bus BC, élaborés par le processeur CPU. Chacun de ces signaux correspond à un des états I à IV illustrés sur les figures 10 et 11.

Les signaux de sortie de ces échantillonneurs-bloqueurs, $VS_1$ à $VS_2$ représentent les intensités détectées pendant les périodes correspondant aux quatre états précités (I à IV), c'est-à-dire les ordonnées de la courbe représentée sur la figure 11, aux points I à IV. Les valeurs échantillonnées sont ensuite mémorisées jusqu'à la prochaine prise d'échantillon.

Les prises d'échantillons s'effectuent selon les séquences représentées sur la figure 10. En "mode A", la séquence est: I, II, etc ...; la dernière valeur restant mémorisée (I sur la figure 10), lors du changement de mode (temps $t_1$). En "mode B", la séquence est: III, IV, etc..., ce jusqu'au temps $t_2$. Ensuite, le cycle recommence en "mode A".

Pour obtenir une valeur représentative des déphasages, il est nécessaire d'élaborer un signal représentant la différence entre les états I et II pour le "mode A" et III et IV pour le "mode B". Pour ce faire, deux amplificateurs différentiels $A_1$ et $A_2$ sont utilisés.

Les signaux de sortie $VS_1$ et $VS_2$ sont transmis à un premier amplificateur $A_1$ dont le signal de sortie $VS_{12}$ représente le signal différence amplifié entre les états I et II. Il en est de même pour les états III et IV: les signaux $VS_3$ et $VS_4$ sont transmis à un second amplificateur $A_2$ qui délivre en sortie un signal différence amplifié $VS_{34}$.

Enfin, un commutateur analogique $K_1$ sélectionne un des deux signaux $VS_{12}$ ou $VS_{34}$ selon que l'on se trouve en "mode A" ou en "mode B", respectivement. Pour ce faire, un signal de sélection de mode, également élaboré par le processeur central est transmis, via le bus BC, à une entrée de commande du commutateur représenté, pour des raisons de simplification, sous la forme d'un composant électromécanique.

Ce commutateur est dans la réalité, un composant électronique semiconducteur intégré. De tels composants sont couramment disponibles du commerce et le choix est conditionné, notamment, par le type de technologie adoptée pour les autres composants.

Le signal de sortie $VK_1$ est transmis à l'amplificateur A comprenant un filtre électrique. Il s'agit de préférence d'un filtre de type dit "P.I.D." (proportionnel-intégral-dérivé) dont la fonction de transfert dépend des caractéristiques recherchées pour l'asservissement en vitesse, c'est-à-dire qui dépendent essentiellement de la fréquence $f_o$ sélectionnée, et qui assure la stabilité de l'ensemble du système. Ce point ne diffère pas de l'Art Connu et ne nécessite pas une plus ample description.

De façon plus spécifique à l'invention, le dispositif comporte ensuite trois blocs en cascade: un convertisseur analogique-numérique AD, les circuits GSC et un convertisseur numérique-analogique DA.

Le convertisseur AD reçoit des signaux de synchronisation et de commande, via le bus BC, pour effectuer des conversions du signal de sortie VA de l'amplificateur A, au rythme de la fréquence $f_o$ et délivre sur sa sortie des signaux numériques signés VAD, c'est-à-dire une valeur binaire proportionnelle à la vitesse et dont le signe représente le sens de rotation.

Les circuits GSC de génération du signal de composite VSC comprennent une première mémoire tampon $M_1$ mémorisant le signal numérique VAD. Cette mémoire reçoit, comme il est habituel, via le bus de commande BC, un signal de chargement pour effectuer la mémorisation du signal VAD au rythme des conversions.

Les signaux mémorisés $SM_1$ disponibles en sortie de la mémoire sont transmis à l'une des entrées $e_1$ de calcul d'un additionneur AD.

Cet additionneur, dans un exemple de réalisation particulier, est constitué de trois circuits additionneurs 4 bits d'usage courant et d'une logique permettant de convertir un nombre de 8 bits signés en un nombre de 12 bits non signés. Toutes autres solutions et/ou longueurs de mots sont naturellement envisageables.

Une deuxième mémoire $M_2$ fonctionnant en registre accumulateur est disposée en cascade et reçoit les signaux de sortie SADD de l'additionneur ADD. Les signaux VSC mémorisés dans cette mémoire $M_2$ disponibles en sortie, sont rebouclés sur une seconde entrée de calcul $e_2$ de l'additionneur ADD et ajoutée à la valeur numérisée de la vitesse de rotation.

On réalise ainsi une intégration numérique en incrémentant la valeur de sortie d'une quantité égale à la vitesse instantanée de rotation, ce avec une période $2t_o$.

Le signal de sortie SADD de cet additionneur ADD est donc représentatif de la position angulaire du gyromètre. Le débordement est représentatif d'un déplacement angulaire d'amplitude déterminée, dans l'exemple particulier de réalisation, le déplacement angulaire étant égal à 5 secondes d'arc, comme il a été indiqué. Le débordement a lieu à chaque fois que la capacité de l'additionneur est dépassée, soit pour une valeur binaire supérieure à $2^N - 1$ (débordement positif) ou inférieure à zéro (débordement négatif), N étant le nombre de bits du mot traité par l'additionneur.

C'est à ce niveau que s'effectue l'incorporation du signal carré de modulation de phase à la fréquence $f_o$.

Ceci est réalisé en additionnant algébriquement une valeur binaire représentant alternativement les valeurs $+ \pi/4$ et $- \pi/4$ radians, soit 0 001 000 000 et 1 001 000 000 dans les conditions de choix de composants précédemment décrites. Ces mots binaires sont élaborés par le processeur CPU et transmis via le bus BC à une troisième entrée $e_3$ de l'additionneur.

L'état de débordement est transmis par une sortie SL, via le bus BC au processeur central CPU. C'est à partir de ces signaux et des signaux d'horloge que celui-ci élabore, à l'aide de fonctions logiques de type "ET", les différents signaux de commandes et de synchronisations transmis aux différents blocs et qui permettent de discriminer les "mode A" du "mode B" et à l'intérieur de ces modes, les états I et II, d'une part, et III et IV, d'autre part.

Comme il a été rappelé, dans une variante supplémentaire avantageuse de l'invention, il est prévu un circuit d'asservissement du facteur d'échelle CAFE qui n'a pas été représenté sur la figure 8.

Si l'on se reporte à nouveau aux figures 12 et 13, il a été indiqué que les différences d'amplitude entre les états I' et IV' d'une part, et II' et III' d'autre part, sont représentatives, lors de transition de $2\pi$ radians, de l'erreur du facteur d'échelle.

La mesure de ces états est représentée par l'amplitude des signaux de sortie $VS_1$ à $VS_4$ des échantillonneurs-bloqueurs $EB_1$ à $EB_4$.

Pour effectuer les différences précitées on dispose dans les circuits d'asservissement du facteur d'échelle deux amplificateurs différentiels $A_{14}$ et $A_{23}$ recevant sur leurs entrées respectivement les signaux $VS_1$ et $VS_4$ et les signaux $VS_2$ et $VS_3$.

Les signaux de sortie $VS_{14}$ et $VS_{23}$ représentent, amplifiées, lesdites différences.

Un commutateur analogique $K_2$ du même type que le commutateur $K_1$ et également commandé par un signal indiquant le "mode A" ou le "mode B" transmet sélectivement l'un de ces signaux à un intégrateur analogique IA.

Si l'on désire incorporer ces dispositions dans le dispositif de l'invention, le convertisseur numérique-analogique DA n'assure pas seulement la conversion mais également multiplie le signal analogique issu de la conversion par une valeur représentative du coefficient d'échelle. Pour ce faire, il comporte une entrée de multiplication $e_M$ recevant le signal de sortie SIA de l'intégrateur analogique.

Naturellement, les conversions sont synchronisées au rythme de la fréquence $f_0$ par des signaux transmis par le bus BC.

Le dispositif est complété par un amplificateur de puissance AP auquel est transmis le signal de commande VC, issu de la conversion numérique analogique. Le signal de sortie VC' est transmis par une ligne coaxiale adaptée LC à l'entrée de commande du modulateur de phase Φ disposé dans l'anneau. Ces dernières dispositions, prises en soi, ne diffèrent en rien de l'Art Connu.

La boucle d'asservissement est ainsi refermée, le modulateur de phase Φ imprimant une modulation composite de phase aux ondes lumineuses contra-rotatives aux rythmes combinées de la fréquence $f_0$ et des relaxations de la "rampe" numérique de phase, modulation de phase réciproque qui se combinera aux effets non-réciproques proportionnels à la vitesse de rotation.

En résumé et pour fixer les idées, dans les conditions de choix des composants qui ont été énoncées, la précision pouvant être atteinte sur le facteur d'échelle est typiquement $10^{-4}$. L'information de position est fournie sous la forme de deux trains d'impulsions, représentant des incréments angulaires positifs ou négatifs de 5 secondes d'arcs par impulsion.

Plus particulièrement avec le choix indiqué du convertisseur analogique-numérique à 8 bits et l'intégration numérique sur 12 bits, la dynamique en vitesse est limitée par le nombre de bits utilisés: la vitesse maximale est celle qui donne un déphasage de ($\pi/8$) radians puisque la vitesse est mesurée sur 8 bits alors que la pleine échelle sur 12 bits vaut $2\pi$ radians. Cette valeur correspond à une rotation maximale de $\pm$ 23 degrés par seconde. Pour augmenter la dynamique possible, il suffit d'augmenter le nombre de bits du mot binaire fourni par le convertisseur AD, ce qui augmente d'autant la dynamique. Ceci n'est cependant possible que dans la mesure où le déphasage reste inférieur à $2\pi$ radians. Cette condition correspond à des vitesses de rotation de l'ordre de 350 degrés par seconde.

Il est également possible d'augmenter la dynamique en décalant les huit bits de la mesure de vitesse. On ajoute des bits de poids forts et on supprime autant de bits de poids faibles. Le nombre total de bits est ainsi conservé pour la vitesse. Il faut alors diminuer le nombre de bits de la position d'une quantité égale.

On peut naturellement mesurer des vitesses plus élevées, il suffit de réduire la longueur de fibre optique formant l'anneau. On augmente alors la fréquence de modulation et on rend les déphasages optiques plus faibles pour une vitesse de rotation déterminée.

Il est possible pour augmenter la dynamique d'augmenter également la fréquence de modulation, en le multipliant par un nombre entier impair $2N+1$. L'incrément maximum réalisable est multiplié également par $2N+1$.

Il subsiste un problème lié au fait que les signaux sont traités de façon numérique, c'est-à-dire quantifiés. Pour de très faibles vitesses de rotation, la mesure de vitesse devrait être nulle si l'on se trouve en dessous du seuil de quantification. Cependant, la solution réside dans l'utilisation de façon avantageuse du bruit optique.

En effet, si l'on utilise une détection synchrone large bande, typiquement supérieure à 100 KHz, compte-tenu des puissances utilisées, typiquement de l'ordre de 0,5 W, le rapport entre l'amplitude du bruit et le seuil de quantification est de l'ordre de 2. Les caractéristiques du filtre associé à l'amplificateur A doivent tenir compte de ces données.

La sensibilité se trouve augmentée artificiellement du fait de la mesure du bruit et de la moyenne qui est faite de cette mesure par l'intégration numérique. Dans des cas extrêmes, il peut s'avérer nécessaire de rajouter au signal un bruit de caractéristiques connues.

En jouant sur ce même phénomène, on peut d'ailleurs réduire la précision du convertisseur analogique-numérique à un nombre arbitrairement faible de bits, compatible avec l'amplitude du bruit de la chaîne d'éléments en boucle fermée et la dynamique recherchée.

Une valeur limite extrême est la conversion sur un seul bit. Dans ce cas, et selon une variante non représentée, le convertisseur analogique-numérique peut se réduire à des comparateurs fournissant en sortie des signaux de types "tout ou rien", selon que l'on dépasse ou non un seuil préétabli.

Le dispositif de l'invention permet donc une mesure très précise et sensible de la rotation tout en n'exigeant pas l'utilisation d'éléments à tolérances très serrées, ce qui permet une réalisation peu coûteuse. En outre, du fait que la rotation est représentée par une double séquence d'impulsions, l'exploitation de signaux de ce type est aisée à l'aide d'éléments de calcul de type numérique, par exemple à l'aide du processeur CPU utilisé par ailleurs pour fournir les différents signaux de commandes et de synchronisations qui ont été décrits.

La présente invention n'est cependant pas limitée aux seules variantes d'exécution décrites à titre d'illustration plus complète de l'invention.

A titre d'exemple non limitatif, la fréquence des signaux carrés de modulation peut être plus élevée que la fréquence ($1/t_0$) des transitions des "marches" de la rampe numérique (figure 7), de façon plus précise, la fréquence des signaux carrés de modulation obéit à la relation: $m(1/t_0)$; m étant un nombre entier impair supérieur ou égal à l'unité.

**Revendications**

1. Dispositif interférométrique de mesure d'un déphasage non réciproque subi par deux ondes lumineuses circulant en sens opposés dans un guide d'onde en anneau (2), ce dispositif comprenant une source lumineuse monochromatique (S), des moyens photodétecteurs (PD) de l'interférence de ces deux ondes délivrant un signal électrique de sortie (VD) représentatif de l'intensité lumineuse de l'interférence détectée et des moyens optiques séparateurs et mélangeurs (M) couplant optiquement les extrémités de ce guide d'onde à la source lumineuse et aux moyens photodétecteurs, des moyens de déphasage optique ($\Phi$) à commande électrique disposés dans l'anneau (2) agissant sur ces ondes; un oscillateur (OSC) délivrant des signaux électriques périodiques en créneaux de fréquence $f_o = 1/2t_o$; $t_o$ étant le temps mis par chacune des ondes pour parcourir le chemin optique défini par l'anneau (2); caractérisé en ce qu'il comprend des circuits de détection synchrone (CDS) recevant le signal de sortie (VD) du photodétecteur sur une première entrée et un signal de synchronisation de la détection (SY) dérivé desdits signaux électriques de fréquence $f_o$ sur une seconde entrée; un convertisseur analogique numérique (AD) connecté à la sortie des circuits de détection synchrone et convertissant les signaux électriques (VA) issus de la détection synchrone en un mot binaire signé (VAD) de longueur déterminée, des circuits (GSC) de génération d'un signal de commande numérique composite (VSC) et un convertisseur numérique-analogique (DA) convertissant ce signal de commande numérique composite en un signal de commande analogique (VC) transmis à une entrée de commande desdits moyens de déphasages optiques ($\Phi$); et des moyens (CPU) de commande et de synchronisation des circuits de détection synchrone (CDS), du convertisseur analogique-numérique (AD), des circuits (GSC) de génération du signal de commande numérique composite (VSC) et du convertisseur numérique-analogique (DA); et en ce que les circuits (GSC) de génération dudit signal de commande numérique composite (VSC) élaborent un signal issu de la superposition d'un premier signal périodique en créneaux ($\Phi$ (t)) à ladite fréquence $f_o$ tel que, après conversion numérique-analogique (DA), ce premier signal imprime un déphasage périodique à effet réciproque alternativement de $+ \pi/2$ et $- \pi/2$ radians auxdites deux ondes circulant en sens inverses dans l'anneau (2), et d'un second signal, en marches d'escalier ($\Phi'_1$), chaque marche ayant une durée égale audit temps $t_o$ ou à un multiple impair entier de ce temps et une amplitude telle que, après conversion analogique-numérique (DA), ce second signal imprime des déphasages supplémentaires incrémentaux à effet réciproque d'amplitude ($\Delta \Phi_o$) proportionnelle à l'amplitude dudit déphasage non-réciproque, et de signe opposé; le déphasage imprimé par le second signal présentant une relaxation d'amplitude $2 \pi$ radians; de manière à ce que ladite superposition des premier et second signaux formant le signal de commande composite (VSC) imprime aux ondes circulant en sens inverses dans l'anneau (2) des déphasages totaux, entre ces deux ondes variant alternativement entre $-\pi/2$ et $+ \pi/2$ radians pendant des premières périodes (I, II) et $- 3\pi/2$ et $+ 3 \pi/2$ radians pendant des secondes périodes (III, IV); ces premières et secondes périodes se succédant selon une séquence imbriquée ("mode A", "mode B").

2. Dispositif selon la revendication 1, caractérisé en ce que les circuits de détection synchrone (CDS) comprennent une première paire d'échantillonneurs bloqueurs ($EB_1$, $EB_2$) mémorisant l'amplitude maximale d'un signal électrique (VD') issu de la captation et de la conversion photoélectrique par les moyens photodétecteurs (PD) de l'intensité optique de l'interférence des ondes circulant en sens inverses pendant lesdites premières périodes ("mode A"), un premier échantillonneur bloqueur ($EB_1$) mémorisant l'amplitude maximale lorsque le déphasage total entre lesdites ondes est $- \pi/2$ radians et un second échantillonneur bloqueur ($EB_2$) mémorisant cette amplitude lorsque le déphasage total entre ces ondes est $+ \pi/2$ radians; une seconde paire d'échantillonneurs bloqueurs ($EB_3$, $EB_4$) mémorisant l'amplitude maximale du même signal électrique (VD') pendant lesdites secondes périodes ("mode B"), un troisième échantillonneur bloqueur ($EB_3$) mémorisant l'amplitude maximale lorsque le déphasage total entre les ondes est $- 3 \pi/2$ radians et un quatrième échantillonneur bloqueur ($EB_4$) lorsque ce déphasage est $+ 3\pi /2$ radians; des premier et second amplificateurs différentiels ($A_1$, $A_2$) effectuant la différence entre les amplitudes maximales mémorisées dans les premier et second ($EB_1$, $EB_2$) et entre les troisième et quatrième ($EB_3$, $EB_4$) échantillonneurs bloqueurs, respectivement desdites première et seconde paires et un commutateur analogique ($K_1$) connectant alternativement la sortie ($VK_1$), des circuits de détection synchrone aux sorties ($VS_{12}$, $VS_{34}$) des premier ($A_1$) et second ($A_2$) amplificateurs respectivement pendant lesdites premières ("mode A") et secondes périodes ("mode B").

3. Dispositif selon la revendication 1, caractérisé en ce que les circuits de génération (GSC) dudit signal de commande numérique composite (VSC) comprennent des premiers moyens de mémorisation ($M_1$) recevant sur une entrée de mémorisation des signaux (VAD) issus de la conversion analogique numerique (DA), un additionneur (ADD) à trois entrées ($e_1$, $e_2$, $e_3$) et des première et seconde sorties, recevant sur la première entrée ($e_1$) les signaux mémorisés par les premiers moyens de mémorisation ($M_1$), la troisième entrée ($e_3$) recevant des signaux numériques, prenant des premières et secondes valeurs au rythme de la fréquence $f_o$ représentant, après conversion numérique analogique (DA), des signaux de commande du déphasage entre les ondes circulant en sens inverses dans l'anneau (2), respectivement pour imprimer des déphasages de - $\pi/2$ et + $\pi/2$ radians; des seconds moyens de mémorisation ($M_2$) recevant sur une entrée de mémorisation les signaux (SADD) délivrés sur la première sortie de l'additioneur (ADD) et dont les signaux mémorisés (VSC) sont transmis à la deuxième entrée ($e_2$) de l'additionneur par rebouclage de cette première sortie sur cette deuxième entrée ($e_2$); l'additionneur (ADD) et les seconds moyens de mémorisation ($M_2$) formant un intégrateur numérique dont les débordements, transmis par une seconde sortie (SL) auxdits moyens de commande (CPU), sont significatifs d'un déphasage non réciproque d'amplitude déterminée.

4. Dispositif selon la revendication 2, caractérisé en ce que, l'amplitude des déphasages entre les ondes circulant en sens inverses dans l'anneau (2), imprimés par les moyens de déphasages optiques ($\Phi$) à commande électrique, et l'amplitude dudit signal de commande analogique (VC) étant liés par un facteur d'échélle, il comprend en outre un circuit d'asservissement (CAFE) de ce facteur d'échelle comprenant des troisième ($A_{14}$) et quatrième ($A_{23}$) amplificateurs différentiels formant la différence entre les signaux mémorisés, respectivement dans lesdits premier ($EB_1$) et quatrième ($EB_4$) échantillonneurs bloqueurs et dans les deuxième ($EB_2$) et troisième ($EB_3$) échantillonneurs bloqueurs; un commutateur analogique ($K_2$) actionné à chaque transition entre lesdites premières ("mode A") et secondes ("mode B") périodes de manière à transmettre sur sa sortie, au rythme des transitions, alternativement les signaux présents sur les sorties des troisième ($A_{14}$) et quatrième ($A_{23}$) amplificateurs différentiels; et un intégrateur analogique (IA);

et en ce que ledit convertisseur analogique-numérique (AD) est combiné à un multiplicateur analogique de manière à multiplier l'amplitude du signal issu de la conversion par le signal (SIA) délivré par cet intégrateur analogique (IA).

5. Dispositif selon la revendication 1, caractérisé en ce que les moyens (CPU) de commande et de synchronisation sont constitués par un processeur de signal réalisé en logique cablée.

## Patentansprüche

1. Interferometrische Vorrichtung zur Messung einer nichtreziproken Phasenverschiebung zwischen zwei in entgegengesetzter Richtung in einem Ringwellenleiter (2) umlaufenden Lichtwellen, mit einer monochromatischen Lichtquelle (S), mit Lichtdetektormitteln (PD) zur Erfassung der Interferenz der beiden Wellen, wobei diese Mittel ein für die Lichtintensität der erfaßten Interferenz repräsentatives elektrisches Ausgangssignal (VD) liefern, und mit optischen Trenn- und Mischmitteln (M), welche optisch die Enden des Wellenleiters an die Lichtquelle und an die Lichtdetektormittel koppeln, mit elektrisch gesteuerten auf die Wellen einwirkenden optischen Phasenschiebermittel ($\emptyset$), die im Ring (2) angeordnet sind, und mit einem Oszillator (OSC), der elektrische periodische Rechtecksignale mit einer Frequenz von $f_0 = 1/2$ $t_0$ liefert, wobei $t_0$ die Zeit ist, die jede der Wellen benötigt, um den durch den Ring (2) definierten Weg zu durchlaufen, dadurch gekennzeichnet, daß sie umfaßt: synchrone Detektorkreise (CDS), welche das Ausgangssignal (VD) des Lichtdetektors an einem ersten Eingang und ein von den elektrischen Signalen der Frequenz $f_0$ abgeleitetes Detektorsynchronisationssignal (SY) an einem zweiten Eingang empfangen; einen Analog-Digital-wandler (AD), welcher an den Ausgang der Synchron-Detektorkreise angeschlossen ist und die aus dem Synchrondetektor kommenden elektrischen Signale (VA) in ein vorzeichenbehaftetes Binärwort (VAD) bestimmter Länge umwandelt; Generatorkreise (GSC) zur Erzeugung eines zusammengesetzten digitalen Steuersignals (VSC); einen Digital-Analog-Wandler (DA), der das zusammengesetzte digitale Steuersignal in ein Analogsteuersignal (VC) umwandelt, welches an einen Steuereingang der optischen Phasenschiebermittel ($\emptyset$) übermittelt wird; und Mittel (CPU) zur Steuerung und Synchronisierung der Synchron-Detektorkreise (CDS), des Analog-Digital-Wandlers (AD), der Generatorkreise (GSC) zur Erzeugung des zusammengesetzten digitalen Steuersignals (VSC) und des Digital-Analog-Wandlers (DA); und daß die Generatorkreise (GSC) zur Erzeugung des zusammengesetzten digitalen Steuersignals (VSC) ein Signal erzeugen, welches aus der Überlagerung zweier Signale entstanden ist, nämlich eines ersten periodischen Rechtecksignals ($\emptyset$(t)) der Frequenz $f_0$, das nach Digital-Analog-Umwandlung (DA) den beiden in entgegengesetzter Richtung im Ring (2) umlaufenden Wellen eine periodische Phasenverschiebung reziproker Wirkung von abwechselnd +$\pi/2$ und -$\pi/2$ im Bogenmaß aufprägt, und eines zweiten treppenstufenförmigen Signals ($o'_1$), wobei jede Stufe eine Dauer besitzt, welche gleich der Zeit $t_0$ oder einem ungeradzahligen ganzen Vielfachen dieser Zeit ist und eine solche Amplitude besitzt, daß nach der Analog-Digital-Umwandlung (DA) dieses zweite Signal zusätzliche, inkrementale Phasenverschiebungen reziproker Wirkung von einer Amplitude ($\Delta \Phi_0$) bewirkt, welche proportional zur Amplitude der nicht-reziproken Phasenverschiebung ist und umgekehrtes Vorzeichen besitzt, wobei die vom zweiten Signal bewirkte Phasenverschiebung eine Amplitudenrelaxation von $2\pi$ im Bogenmaß aufweist, derart, daß die Überlagerung der ersten und des zweiten Signals, welche das zusammengesetzte Steuersignal (VSC) bildet, den in entgegengesetzter Richtung im Ring (2) umlaufenden Wellen insgesamt Phasenverschiebungen zwischen den beiden Wellen aufprägt, welche während der ersten Perioden (I, II) abwechselnd zwischen -π/2 und +π/2 im Bogenmaß und während der zweiten Perioden (III, IV) zwischen -3 π/2 und +3π/2 im Bogenmaß schwanken, wobei sich diese ersten und zweiten Perioden in einer verschachtelten Folge aneinanderreihen ("Modus A", "Modus B").

2. Vorrichtung nach Anspruch 1, dadurch gekennzeichnet, daß die synchronen Detektorkreise (CDS) umfassen: ein erstes Paar Tast- und Haltekreise (EB$_1$, EB$_2$), welche während der ersten Perioden ("Modus A") die größte Amplitude eines elektrischen Signals (VD') speichern, das aus der lichtelektrischen Erfassung und Umwandlung der optischen Intensitäten der in entgegengesetzter Richtung umlaufenden Wellen durch die Lichtdetektormittel (PD) entstanden ist, wobei ein erster Tast- und Haltekreis (EB$_1$) die größte Amplitude dann speichert, wenn die gesamte Phasenverschiebung zwischen den Wellen -π/2 im Bogenmaß beträgt, und ein zweiter Tast- und Haltekreis (EB$_2$) diese Amplitude speichert, wenn die gesamte Phasenverschiebung zwischen den Wellen +π/2 im Bogenmaß beträgt; ein zweites Paar Tast- und Haltekreise (EB$_3$, EB$_4$), welche die größte Amplitude des gleichen elektrischen Signals (VD') während der zweiten Perioden ("Modus B") speichern, wobei ein dritter Tast- und Haltekreis (EB$_3$) die größte Amplitude dann speichert, wenn die gesamte Phasenverschiebung zwischen den Wellen -π/2 im Bogenmaß beträgt, und ein vierter Tast- und Haltekreis (EB$_4$) die größte Amplitude speichert, wenn die Phasenverschiebung +3π/2 im Bogenmaß beträgt; erste und zweite Differentialverstärker (A$_1$, A$_2$), welche die Differenz bilden zwischen den in den ersten und zweiten (EB$_1$, EB$_2$) und zwischen den in den dritten und vierten Tast- und Haltekreisen (EB$_3$, EB$_4$) bzw. ersten und zweiten Paaren gespeicherten größten Amplituden, und einen Analogschalter (K$_1$), welcher jeweils während der ersten ("Modus A") und zweiten ("Modus B") Perioden alternierend den Ausgang (VK$_1$) der Synchron-Detektorkreise mit den Ausgängen (VS$_{12}$, VS$_{34}$) des ersten (A$_1$) und zweiten (A$_2$) Differentialverstärkers verbindet.

3. Vorrichtung nach Anspruch 1, dadurch gekennzeichnet, daß die Generatorkreise (GSC) zur Erzeugung des zusammengesetzten digitalen Steuersignals (VSC) umfassen: erste Speichermittel (M$_1$), welche an einem Speichereingang Signale (VAD) empfangen, die bei der Analog-Digital-Umwandlung ((DA) entstanden sind, einen Addierer (ADD) mit drei Eingängen (e$_1$, e$_2$, e$_3$) und ersten und zweiten Ausgängen, der am ersten Eingang (e$_1$) die in den ersten Speichermitteln (M$_1$) gespeicherten Signale empfängt und am dritten Eingang (e$_3$) digitale Signale empfängt, die erste und zweite Werte im Takt der Frequenz f$_0$ annehmen, die nach Digital-Analog-Umwandlung (DA) Steuersignale für die Phasenverschiebung der in entgegengesetzter Richtung im Ring (2) umlaufenden Wellen darstellen, um Phasenverschiebungen von -π/2 bzw. +π/2 im Bogenmaß einzuführen; zweite Speichermittel (M$_2$), welche an einem Speichereingang die Signale (SADD) empfangen, die vom ersten Ausgang des Addierers (ADD) kommen, und deren gespeicherte Signale (VSC) an den zweiten Eingang (e$_2$) des Addierers durch Rückkopplung dieses ersten Ausgangs an den zweiten Eingang (e$_2$) geleitet werden; wobei der Addierer (ADD) und die zweiten Speichermittel (M$_2$) einen digitalen Integrator bilden, dessen Überläufe, die über einen zweiten Ausgang (SL) an die Steuermittel (CPU) gelangen, für eine nicht-reziproke Phasenverschiebung bestimmter Amplitude signifikant sind.

4. Vorrichtung nach Anspruch 2, dadurch gekennzeichnet, daß die Amplitude der Phasenverschiebungen zwischen den in entgegengesetzter Richtung im Ring (2) umlaufenden Wellen, welche durch die elektrisch gesteuerten, optischen Phasenverschiebungsmittel (∅) aufgeprägt werden, und die Amplitude des Analogsteuersignals (VC) durch einen Maßstabsfaktor miteinander verbunden sind, und daß die Vorrichtung weiter aufweist: einen Servokreis (CAFE) für diesen Maßstabsfaktor, welcher einen dritten (A$_{14}$) und vierten (A$_{23}$) Differentialverstärker umfaßt, die die Differenz zwischen den im ersten (EB$_1$) und im vierten Tast- und Haltekreis (EB$_4$) bzw. den im zweiten (EB$_2$) und dritten Tast- und Haltekreis (EB$_3$) gespeicherten Signalen bilden; einen Analogschalter (K$_2$), welcher bei jedem Übergang zwischen den ersten ("Modus A") und den zweiten ("Modus B") Perioden betätigt wird, derart, daß an seinen Ausgang im Takt der Übergänge alternativ die an den Ausgängen der dritten (A$_{14}$) und vierten (A$_{23}$) Differentialverstärker anstehenden Signale geliefert werden; und einen Analogintegrator (IA);

und daß der Analog-Digital-Wandler (AD) derart mit einem Analogmultiplizierer kombiniert ist, daß die Amplitude des bei der Umwandlung entstehenden Signals multipliziert wird mit dem vom Analogintegrator (IA) gelieferten Signal (SIA).

5. Vorrichtung nach Anspruch 1, dadurch gekennzeichnet, daß die Steuer- und Synchronisiermittel (CPU) aus einem Signalprozessor mit verdrahteter Logik bestehen.

**Claims**

1. An interferometric device for measuring a non-reciprocal phase shift incurred by two light waves circulating in opposite directions through a ring-shaped wave guide (2), the device comprising a monochromatic light source (S), photodetector means (PD) for detecting the interference of these two waves and supplying an electrical output signal (VD) representative for the light intensity of the detected interference, and optical separator and mixer means (M) adapted to couple optically the ends of this wave guide to the light source, and the photodetector means, electrically controlled optical phase shifting means ($\Phi$) disposed in the ring (2) and impacting upon the waves; an oscillator (OSC) delivering electrical periodic square pulse signals at a frequency $f_o = 1/2 \, t_o$ ; wherein $t_o$ is the time taken by each of the waves for passing through the path defined by the ring (2), characterized in that it comprises: synchronous detection circuits (CDS) receiving the output signal (VD) of the photodetector on a first input and a detection synchronizing signal (SY), derived from said electrical signals at a frequency $f_o$, on a second input; an analog-digital converter (AD) connected to the output of the synchronous detection circuits and adapted to convert the electrical signals (VA) issuing from the synchronous detection into a binary word (VAD) of a determined length having a sign; circuits (GSC) for generating a composite digital control signal (VSC) and a digital-analog converter (DA) adapted to convert this composite digital control signal into an analog control signal (VC) transmitted to a control input of said optical phase-shifting means ($\Phi$); and means (CPU) for controlling and synchronizing the synchronous detection circuits (CDS), the analog-digital converter (AD), the circuits (GSC) for generating the composite digital control signal (VSC) and the digital-analog converter (DA); and in that the circuits (GSC) for generating the composite digital control signal (VSC) generate a signal resulting from the superposition of two signals, namely of a first periodic square signal ($\Phi(t)$) at said frequency $f_o$, which, after digital-analog conversion (DA), imparts a reciprocal periodic phase shift alternating between $+\pi/2$ and $-\pi/2$ radians upon both of said waves circulating in opposite directions through the ring (2), and of a second signal having staircase shape ($\Phi'_1$), each step having a duration equal to said time $t_o$ or being an integer odd multiple of said time and having an amplitude such that, after analog-digital conversion (DA), this second signal imparts supplementary incremental phase shifts, having reciprocal effect, of an amplitude ($\Delta \Phi_o$) which is proportional to the amplitude of said non-reciprocal phase shift, and of opposite sign; wherein the phase shift imparted by the second signal has an amplitude relaxation of $2\pi$ radians; such that said superposition of the first and second signals forming the composite control signal (VSC) imparts upon the waves circulating in opposite directions through the ring (2) a total phase shift that varies between the two waves alternatively between $-\pi/2$ and $+\pi/2$ radians during the first periods (I, II) and $-3\pi/2$ and $+3\pi/2$ radians during the second periods (III, IV); these two periods succeeding each other according to an imbricated sequence ("Mode A", "Mode B").

2. A device according to claim 1, characterized in that the synchronous detection circuits (CDS) comprise: a first pair of sample and hold circuits ($EB_1$, $EB_2$) adapted to store the maximum amplitude of an electric signal (VD') resulting from the detection and photoelectric conversion of the optical intensity of the interference of the waves circulating in opposite directions during said first periods ("Mode A") by the photodetector means (PD), wherein a first sample and hold circuit ($EB_1$) stores the maximum amplitude, when the total phase shift between said waves is $-\pi/2$ radians, and a second sample and hold circuit ($EB_2$) stores that amplitude, when the total phase shift between the waves is $+\pi/2$ radians; a second pair of sample and hold circuits ($EB_3$, $EB_4$) adapted to store the maximum amplitude of the same electric signal (VD') during said second periods ("Mode B"), wherein a third sample and hold circuit ($EB_3$) stores the maximum amplitude, when the total phase shift between the waves is $-3\pi/2$ radians, and a fourth sample and hold circuit ($EB_4$) stores the maximum amplitude, when the phase shift is $+3\pi/2$ radians; first and second differential amplifiers ($A_1$, $A_2$) establishing the difference between the maximum amplitudes stored in the first and second sample and hold circuits ($EB_1$, $EB_2$) and between the third and fourth sample and hold circuits ($EB_3$, $EB_4$) of said first and second pairs respectively, and an analog switch ($K_1$) connecting alternatively the output ($VK_1$) of the synchronous detection circuits to the outputs ($VS_{12}$, $VS_{34}$) of the first ($A_1$) and second amplifiers ($A_2$) respectively during said first ("Mode A") and second periods ("Mode B").

3. A device according to claim 1, characterized in that the circuits (GSC) for generating said composite digital control signal (VSC) comprise first storage means ($M_1$) adapted to receive at a first storage input, signals (VAD) resulting from the analog-digital conversion (DA); an adder (ADD) having three inputs ($e_1$, $e_2$, $e_3$) and first and second outputs, adapted to receive on the first input ($e_1$) the signals stored by the first storage means ($M_1$), the third input ($e_3$) being adapted to receive digital signals taking first and second values according to the rythm of the frequency $f_o$ representing, after digital-analog conversion (DA), control signals of the phase shift between the waves circulating in opposite direction through the ring (2), imparting phase shifts of $-\pi/2$ and $+\pi/2$ radians respectively; second storage means ($M_2$) adapted to receive on a storage input the signals (SADD) supplied by the first output of the adder (ADD) and to transmit the stored signals (VSC) to the second input ($e_2$) of the adder by means of feeding this first ouput back to this second input ($e_2$); wherein the adder (ADD) and the second storage means ($M_2$) constitute a digital integrator, the overflow of which, transmitted by a second output (SL) to said control means (CPU), is significant for the non-reciprocal phase shift of a predetermined amplitude.

4. A device according to claim 2, characterized in that, the amplitude of the phase shifts between the waves circulating in opposite directions through the ring (2) imparted by the electrically controlled optical phase shifting means ($\Phi$), and the amplitude of said analog control signal (VC) being mutually related by a scale factor, the device comprises further: a servo circuit (CAFE) for the scale factor including third ($A_{14}$) and fourth ($A_{23}$) differential amplifiers establishing the difference between the signals stored respectively in the first ($EB_1$) and fourth ($EB_4$) sample and hold circuits and in the second ($EB_2$) and third ($EB_3$) sample and hold circuits; an analog switch ($K_2$) actuated at each transition betweeen said first ("Mode A") and second ("Mode B") periods, such as to transmit the signals presents on the outputs of the third ($A_{14}$) and fourth ($A_{23}$) differential amplifiers to its output, according to the transitions' rythm; and an analog integrator (IA);

and that said analog-digital converter (AD) is combined with an analog multiplier in such a way as to multiply the amplitude resulting from the conversion with the signal (SIA) supplied by the analog integrator (IA).

5. A device according to claim 1, characterized in that the control and synchronization means (CPU) are constituted by a signal processor made up of wired logic.

FIG_1

FIG_2

0 168 292

FIG_3

FIG_4

FIG_6

FIG_7

3

FIG_5

$\Phi(t)$

$2t_0$

$\pi/4$

t

$\overline{\Phi}_{CW}$

$\Delta\varphi_0/2$

$\Phi'_{CW}$

t

$t_0$

$\Phi_{CCW}$

$\Delta\varphi_0/2$

$\Phi'_{CCW}$

t

$(\Phi_{CCW}-\Phi_{CW})$

$\Delta\varphi_0$

$(\Phi'_{CCW}-\Phi'_{CW})$

$+\pi/4$

0

$-\pi/4$

t

$I$

$I_0$

t

$\Omega=0$ $\Omega\neq 0$

0 168 292

# FIG_8

# FIG_9

# FIG_10

# FIG_11

# FIG_12

# FIG_13

FIG_14